# EUROPEAN PATENT SPECIFICATION

(11) **EP 0 806 498 B1**
(45) Date of publication and mention of the grant of the patent: **22.08.2001**
(21) Application number: 97303138.8
(22) Date of filing: 08.05.1997
(51) Int. Cl.: C25B 15/00, C25B 1/04, C25B 9/00

(54) **An apparatus for producing hydrogen and oxygen**
Verfahren zur Herstellung von Wasserstof und Sauerstoff
Dispositif pour la production d'hydrogène et d'oxygène

(30) Priority: 08.05.1996 JP 11345896; 27.05.1996 JP 13148096
(43) Date of publication of application: 12.11.1997
(73) Proprietor: Shinko Pantec Co., Ltd., Kobe-shi, Hyogo 651-0072 (JP)
(72) Inventor: Hirai, Kiyoshi, Kakogawa-shi, Hyogo 675-01 (JP); Yasui, Shinichi, Kakogawa-shi, Hyogo 675 (JP); Kobayashi, Hiroko, Kobe-shi, Hyogo 653 (JP); Morioka, Teruyuki, Kakogawa-shi, Hyogo 675-01 (JP); Miyake, Akiko, Kobe-shi, Hyogo 654-01 (JP); Harada, Hiroyuki, Tokyo 178 (JP)
(74) Representative: Jackson, Robert Patrick

(56) References cited:
- EP-A- 0 478 980
- WO-A-91/07525
- FR-A- 573 088
- FR-A- 2 410 058
- US-A- 5 401 371

## Description

The present invention relates to an apparatus for producing hydrogen and oxygen of high purity (hereinafter referred to as an "HHOG"). In particular, the present invention relates to an HHOG which electrolyzes deionized water to produce hydrogen gas and oxygen gas of high purity and which cools deionized water in a tank that contains an electrolytic cell.

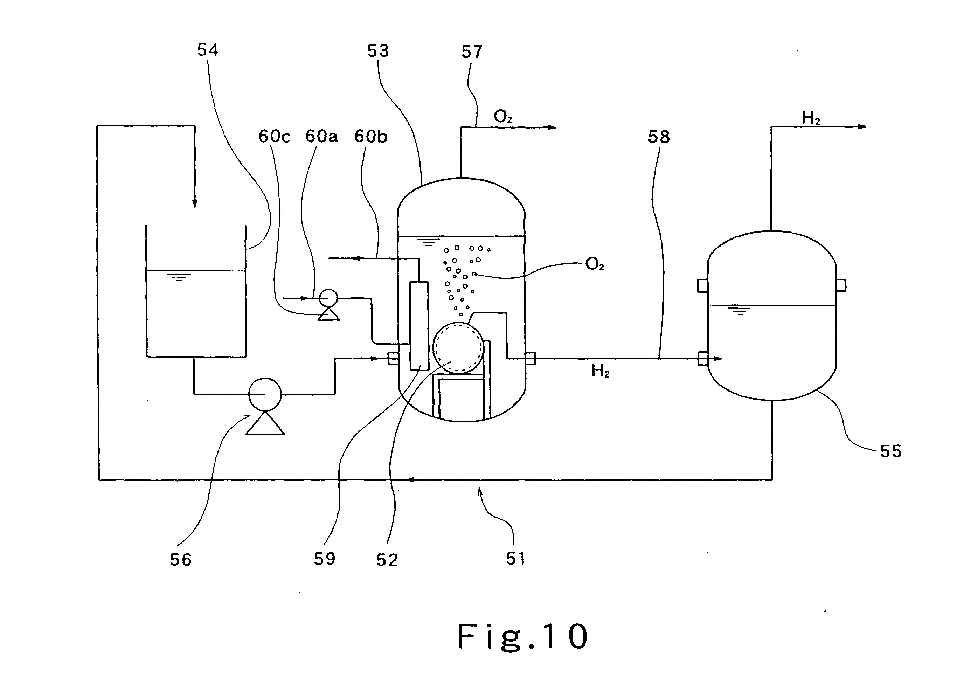

As shown in Fig. 10, a high pressure type apparatus for producing hydrogen and oxygen of high purity (hereinafter referred to as "HHOG") 51 mainly comprises a tank(hereinafter referred to as "deionized water tank") 53 for generating hydrogen and oxygen in which a cell (hereinafter referred to as "electrolytic cell") 52 for electrolyzing deionized water is contained, a deionized water feeding tank 54 for feeding deionized water W to the deionized water tank 53, and a gas-liquid separation tank 55 for hydrogen gas which removes moisture from hydrogen gas H₂. In the diagram numeral 56 is a deionized water feeding pump. Inside the electrolytic cell 52 in the deionized water tank 53 deionized water present inside the electrolytic cell 52 is electrolyzed to generate hydrogen gas H₂ and oxygen gas O₂. The oxygen gas O₂ generated is made to pass directly through the deionized water in the deionized water tank 53, then collected through an oxygen gas discharging pipe 57. On the other hand, the hydrogen gas H₂ generated is not passed through the deionized water in the deionized water tank 53. The hydrogen gas H₂ is guided from the electrolytic cell 52 through a hydrogen gas discharging pipe 58 into a gas-liquid separation tank 55 for hydrogen gas in which moisture is removed. Then the hydrogen gas H₂ is collected.

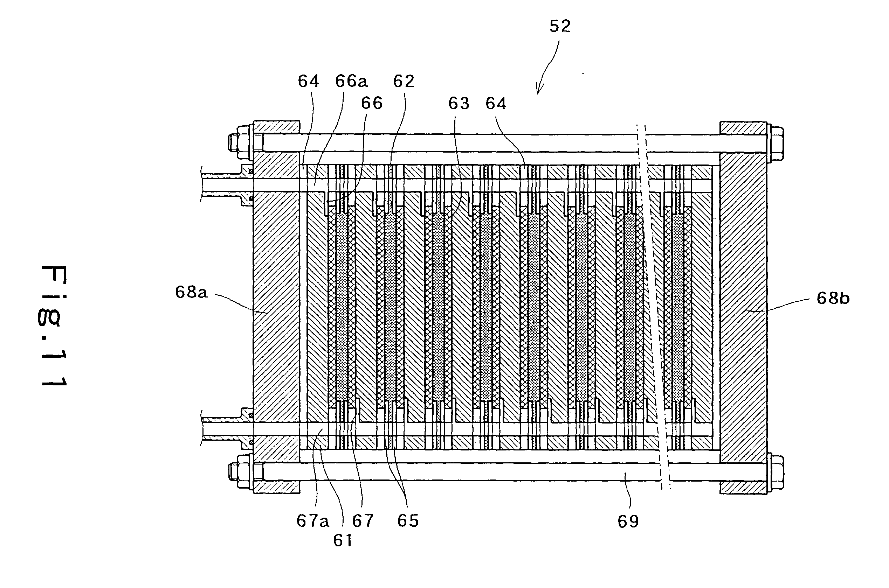

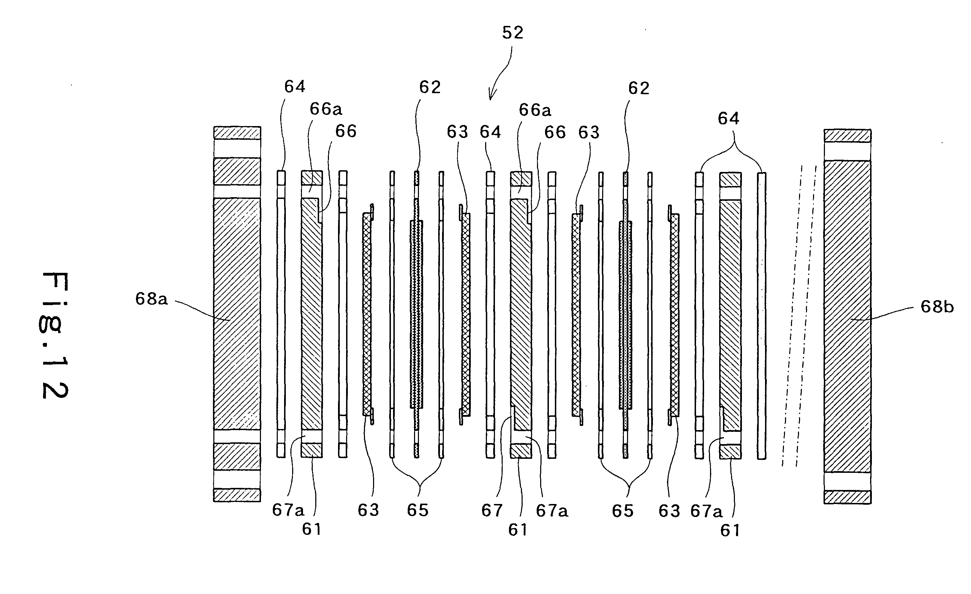

The above-mentioned electrolytic cell 52 is column-shaped, and the construction thereof is shown in Fig. 11 and Fig. 12. Fig. 11 shows the electrolytic cell 52 after the assembly, and Fig. 12 shows the electrolytic cell before the assembly. The electrolytic cell 52 comprises a plurality of electrolyte membrane units stacked together. Each electrolyte membrane unit is provided with electrode plate 61 and ring-shaped gaskets 64 at both side thereof respectively. A space closed by above-mentioned members 61, 62, 64 on one side of the electrolyte membrane 62 forms an anode chamber, and a space closed by above-mentioned members 61, 62, 64 on another side of the electrolyte membrance 62 forms a cathode chamber. The anode chamber and the cathode chamber are provided with a porous conductor 63 respectively. Each electrode plate 61 except both end electrode plates of the electrolytic cell 52 is a bipolar-type electrode plate, which is a single electrode plate having opposing surfaces that have opposite polarity when energized. Numeral 65 denotes a protective sheet. Numeral 66 denotes a hydrogen gas discharging path, and 66a denotes a hydrogen gas discharging duct. Numeral 67 denotes an oxygen gas discharging path, and 67a denotes an oxygen gas discharging duct. Numerals 68a and 68b are end plates. The diagram does not show the deionized water feeding path, but it has a configuration similar to that of the hydrogen gas discharging path 66.

As shown in Fig. 11, the above-mentioned parts are clamped between both the end plates 68a, 68b by bolts 69 to form the electrolytic cell 52.

The electrolytic cell 52 shown in Fig. 10 is arranged horizontally (the central axis of the electrolytic cell is virtually horizontal), but there exist vertically arranged electrolytic cells.

Normally, the temperature of the deionized water in the above-mentioned deionized water tank will rise due to heat generation at the time of electrolysis. This is not desirable from the viewpoint of prevention of thermal degrading of the parts and the like of the electrolytic cell 52. Moreover, the rise in temperature of the deionized water will result in an increase in the water vapor in the deionized water tank 53, and in turn, in an increase in the moisture content in the oxygen gas generated. As a result, the dehumidification load will increase. Moreover, high temperature of the deionized water tank 53 is not preferable for the workers working around the apparatus.

Hence, according to the prior art, a heat exchanger 59 for controlling temperature rise of deionized water is installed in the deionized water tank 53 of a high pressure type HHOG as shown in Fig. 10 to cool the deionized water. It, therefore, is necessary to circulate a coolant, from the outside of the deionized water tank 53, through the heat exchanger 59. Hence pipes 60a, 60b for passing a coolant are installed from a coolant supply source (not illustrated) to the heat exchanger 59; the pipes penetrate the shell wall of the deionized water tank 53. The pipe 60a up to the inlet of the heat exchanger 59 is provided with a pump 60c for supplying a coolant.

It is a general practice to limit the volume of the above-mentioned deionized water tank 53 to just one that is sufficient to store the electrolytic cell 52 and contain the necessary volume of deionized water for electrolysis. The reason for this is that a larger volume than one needed for generating hydrogen and oxygen will reduce the economic efficiency. Hence the size of the heat exchanger 59 must be reduced. Moreover, if the heat exchanger 59 is installed above the electrolytic cell 52, bubbles of oxygen gas generated from the electrolytic cell 52 will adhere to the surface of the heat exchanger and lower the efficiency of the heat exchanger. It, therefore, is inevitable to install the heat exchanger 59 on one side of the electrolytic cell 52, namely, in the gap between the electrolytic cell 52 and the inner surface of the wall of the deionized water tank 53.

A deionized water tank of double shell type wherein a coolant jacket is formed over the outer circumference of a deionized water tank may be used. However, as the internal pressure of the tank is close to 10 kg/cm², the production cost of a high pressure tank of the double shell type is significantly higher. Moreover, as the high pressure tank requires a larger wall thickness of the deionized water tank, the heat exchanging efficiency will be lower.

In an HHOG 51 configured as described above, a heat exchanger 59 must be installed on a side of an electrolytic cell 52 inside a deionized water tank 53. Hence the size, of the heat exchanger 59 is limited. In other words, to install the heat exchanger 59 on one side of the electrolytic cell 52, it is necessary to increase the volume of the deionized water tank 53. Moreover, when the heat exchanger 59 is installed on one side of the electrolytic cell 52, it is difficult to expect effective natural convection of deionized water that accompanies cooling.

The present invention seeks, at least in its most preferred forms, to overcome the above-mentioned problem by providing a HHOG having a cooling mechanism for cooling effectively deionized water in a deionized water tank.

Thus, according to a first aspect of the present invention, there is provided an apparatus for producing hydrogen and oxygen having a deionized water tank containing deionized water and an electrolytic cell wherein a heat exchanger for cooling deionized water in the deionized water tank is provided outside the deionized water tank, characterized in that an inlet of the heat exchanger is connected to a first position that is below the level of the deionized water in the deionized water tank, and in that an outlet of the heat exchanger is connected to a second position that is below the first position in the deionized water tank.

Thus, water within the tank may be cooled by means of the external heat exchanger. Furthermore, the heat exchanger may be connected up with the deionized water tank by means of piping to configure a system wherein no special pump is required and deionized water may be circulated by natural convection through a loop that comprises the deionized water tank having a sort of heat generating source and the heat exchanger having a sort of cold heat source. Moreover, as the heat exchanger is installed outside the deionized water tank, it is possible to make the deionized water tank lighter and more compact and to select the type of heat exchanger according to the service conditions and installation conditions.

Hence the deionized water allows natural circulation due to the natural convection in a loop that comprises the heat exchanger, the deionized water tank and the means for connecting the heat exchanger and the deionized water tank (such as piping). The deionized water in the deionized water tank is heated and will move upward, and the deionized water in the heat exchanger is cooled and will move downward. Hence the deionized water in the deionized water tank will flow from the first position of the deionized water tank into the heat exchanger, and the deionized water in the heat exchanger will flow from the heat exchanger into the second position of the deionized water tank.

As explained above, no pump is required to cause the circulation of the deionized water. As the liquid to be circulated is deionized water having an extremely low viscosity, the deionized water will make natural circulation satisfactorily. If forced circulation of the deionized water is needed, a pump may be provided. For example, it may be a HHOG characterized in that a heat exchanger for cooling deionized water in the deionized water tank is installed outside the deionized water tank, an inlet of the heat exchanger is connected to a first position that is below the level of the deionized water in the tank, and a piping is provided from an outlet of the heat exchanger to the cell and penetrating the wall of the tank for feeding the cell with cooled and deionized water.

Further, as the heat exchanger is installed outside the tank, the deionized water tank can be made lighter and more compact than the conventional one. Thus the production cost can be reduced, and handling for transport and installation is easier. Moreover, in contrast to the prior art, the size, configuration, type, etc. of the heat exchanger are not limited by the volume of the tank. A variety of types of heat exchanger may be selected according to the service conditions of the HHOG, the facilities of a plant where the HHOG is to be installed, the installation area, etc. The type of heat exchanger is not limited; for example, the plate-type heat exchanger and the shell-and-tube-type heat exchanger having a variety of tube shapes are mainly used.

In case of a HHOG wherein the above-mentioned heat exchanger is disconnectably mounted on the tank, the heat exchanger may be integrally mounted on the tank in advance together with piping for connecting up with the tank. Hence the heat exchanger and the tank may be transported as an integral unit, and this will contribute to reduction in cost. When this cooling mechanism is installed, the heat exchanger and the tank may be installed as an integral unit, and there will be no need of piping of the tank and the heat exchanger at the installation site. This will contribute to reduction in cost. Moreover, as the assembly is executed at a factory of the producer, a variety of tests such as leakage test, pressure test and tightness test, that have been made at the installation sites in the past, can be made efficiently at the factory of the manufacturer. This is naturally preferable.

In one construction, piping from the outlet of the heat exchanger to the cell penetrates the wall of the deionised water tank and is connected directly to the electrolytic cell for feeding the cell with cold water.

According to a second aspect of the invention, there is provided an apparatus for producing hydrogen and oxygen comprising;
an electrolytic cell having an anode chamber and a cathode chamber that are separated by an electrolyte membrane and located between electrode plates and, a deionized water tank that contains said electrolytic cell; characterized in that both the anode chamber and cathode chamber are formed as annular compartments being isolated on their inner circumferences and on their outer circumferences from the outside, the entire electrolytic cell being cylindrical with a cavity at the center thereof, and that a heat exchanger for cooling the deionized water in the deionized water tank is arranged in the central cavity of the electrolytic cell.

With the above-mentioned configuration, it is possible to install a heat exchanger in the central cavity of the cylindrical electrolytic cell and to make the deionized water tank more compact. Moreover, deionized water that is cooled by the heat exchanger will descend in the above-mentioned central cavity and then will rise through a gap between the outer circumference of the electrolytic cell and the internal surface of the wall of the deionized water tank. In short, a very effective path is formed for natural convection of the deionized water. Thus, the natural convection of the deinoized water is effectively performed, thereby the cooling efficiency can be improved.

When the above-mentioned cylindrical electrolytic cell is provided with ring-shaped end plates on both ends and both the end plates are clamped together to hold the components of the anode chamber and the cathode chamber between them by using plural clamping means on the inner circumference side and the outer circumference side of the anode chamber and the cathode chamber, restraining portions of the electrolytic cell will be formed on the outer circumference side and the inner circumference side thereof. Hence the rigidity of the electrolytic cell will be enhanced. A variety of known means may be used for the above-mentioned clamping means. Of these means, bolts and nuts are easy to obtain and assemble; thus an increase in costs may be avoided.

It is preferable that the above-mentioned cylindrical electrolytic cell is provided with a ring-shaped electrolyte membrane, ring-shaped porous conductors provided on both the sides of the membrane, ring-shaped electrode plates provided on the outer sides of both the porous conductors, an outer side closing member provided on the outer circumference side of the porous conductors, and an inner side closing member provided on the inner circumference side of the porous conductors. Because the cell can be entirely configured into a compact form. Gaskets may be used for the above-mentioned outer side and inner side closing members. Regarding materials of the gaskets, those of which main component is silicone resin are preferable because their sealing functions are excellent.

It is preferable to stack plural electrolytic cells described above to form an electrolytic module since such construction makes the deionized water tank compact and the construction is able to generate large volume of gases.

When the deionized water tank is installed vertically (the tank is installed in such a way that its central axis is virtually vertical), as described above, the deionized water that is cooled by the heat exchanger will descend in the central cavity of the electrolytic cell, and the deionized water that is heated by the electrolytic cell will rise through the gap between the outer circumference of the electrolytic cell and the internal surface of the wall of the deionized water tank; this natural convection can effectively cool the entire deionized water. In this case, if the oxygen gas discharge path of the electrolytic cell is opened on the outer circumference side of the electrolytic cell, the oxygen gas will rise in the deionized water on the outer circumference side of the electrolytic cell, and the resulting entrained flow of the deionized water will accelerate the ascent of the heated deionized water; thus more effective convection of deionized water will be produced. It is more preferable that the central axis of the central cavity of the cylindrical electrolytic cell being arranged to aline with the central axis of the deionized water tank.

It is preferable to configure the above-mentioned deionized water tank with a tank shell and a tank cover and disconnectably mount the above-mentioned electrolytic cell on the interior surface of the tank cover in such a way that when the above-mentioned tank cover is fit in the tank shell the electrolytic cell will be inside the tank shell, because this arrangement will make it easier to install the electrolytic cell in the deionized water tank. Similarly, in the deionized water tank, it is preferable to disconnectably install the above-mentioned heat exchanger on the interior surface of the tank cover, because this will make it easier to disassemble and install the heat exchanger.

It should be noted that the term "cylindrical" used in the claims means not only circular cylindrical but also prismatic, oval cylindrical, elliptic cylindrical, etc. The term "annular form" used in the claims means not only circular annular form but also multi-angular annular form, oral annular form, elliptic annular form, etc. Moreover, the word "ring-shaped" means not only circular ring-shaped but also multi-angular ring-shaped, oval ring-shaped, elliptic ring-shaped, etc.

Certain embodiments of the invention will now be described, by way of example only, with reference to the accompanying drawings:-
Fig. 1 is a sectional view showing one embodiment of the HHOG according to the present invention.
Fig. 2 is a partially sectional front view showing another embodiment of the HHOG according to the present invention.
Fig. 3 is a sectional view showing another embodiment of the HHOG according to the present invention.
Fig. 4 is a sectional view showing another embodiment of the HHOG according to the present invention.
Fig. 5 is a sectional view showing another embodiment of the HHOG according to the present invention
Fig. 6 is sketch drawing showing a cylindrical electrolytic cell in the HHOG according to the present invention.
Fig. 7 is a sectional view showing the cylindrical electrolytic cell of Fig. 6 before assembly thereof.
Fig. 8 is a sectional view showing the cylindrical electrolytic cell of Fig. 6 after assembly thereof.
Fig. 9 is a sectional view showing one embodiment of a deionized water tank to which the cylindrical electrolytic cell of Fig. 6 is applied.
Fig. 10 is a diragram showing one example of HHOG having the conventional cooling mechanism.
Fig. 11 is a sectional view of an example of the conventional electrolytic cell after assembly thereof.
Fig. 12 is a sectional view of an example of the conventional electrolytic cell of Fig. 11 before assembly thereof.

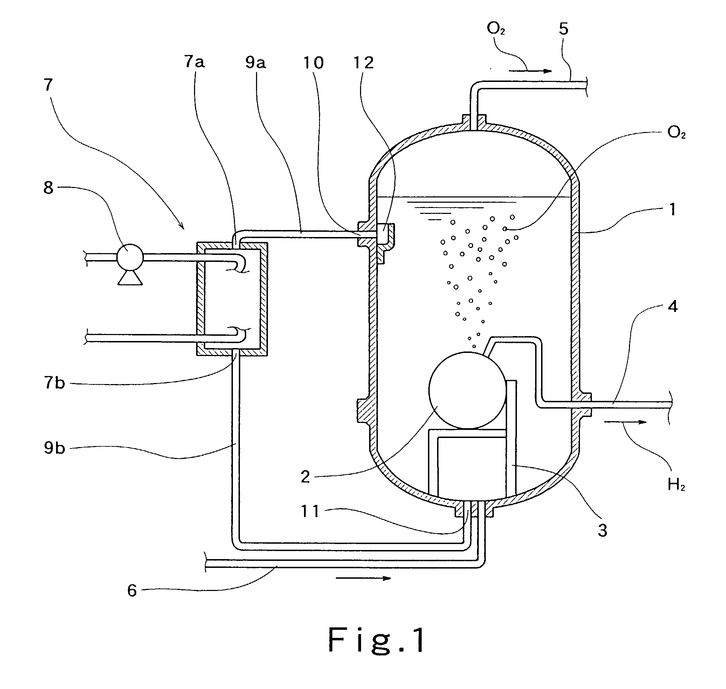

In Fig. 1, 1 denotes a deionized water tank (hereinafter referred to as " tank"), and an electrolytic cell 2 is mounted on a support 3 in the tank 1. A hydrogen gas discharging pipe 4 for guiding out the hydrogen gas generated is extended from the electrolytic cell 2, through a penetration in the wall of the tank 1, to a liquid-gas separation tank (not illustrated) for hydrogen gas. 5 denotes an oxygen gas discharging pipe for guiding out the oxygen gas O₂. Numeral 6 denotes a deionized water feeding pipe.

Numeral 7 denotes a well known plate type heat exchanger. Numeral 8 denotes a coolant supplying pump that supplies a coolant from a coolant supplying source (not illustrated) to the heat exchanger 7. Cold water, freon, etc. are used as the coolant.

An inlet 7a of the heat exchanger 7, being the inlet of the deionized water to be cooled, is connected up with a deionized water flow outlet 10 of the tank 1 by a pipe 9a. An outlet 7b of the heat exchanger 7, being the outlet of the deionized water, is connected up with a deionized water flow inlet of the tank 1 by a pipe 9b. The pipes 9a, 9b are disconnectably joined with flanges (not illustrated).

The above-mentioned deionized water flow outlet 10 is formed above the deionized water flow inlet 11 in the tank 1, and during the operation of the HHOG, the level of the deionized water in the tank 1 is kept above the deionized water outlet 10. As will be described later, it is necessary for cooling the deionized water by natural circulation.

With the configuration described above, the deionized water in the tank, being heated by the electrolytic cell 2 or a heat source, will rise in the tank, and on the other hand, the deionized water that is cooled by in the heat exchanger will descend in the heat exchanger. This natural convection will generates natural circulation of the deionized water in a loop comprising the tank 1, the heat exchanger 7 and pipes 9a, 9b.

Regarding the position, on a horizontal plane, of the inlet 11 for the cooled deionized water relative to that of the electrolytic cell 2 being the heat source, it is preferable to place them in virtually the same position on the horizontal plane or to form the deionized water flow inlet 11 beneath the electrolytic cell 2 as shown in Fig. 1 through Fig. 5 so that the rise in temperature of the deionized water in the tank can be controlled efficiently. The reason is that the cooled deionized water can be directly fed into the electrolytic cell 2.

To provide against an emergency or to prevent the generated oxygen gas, being rising in the form of bubbles, from flowing into the deionized water flow outlet 10 and, in turn, into the heat exchanger 7, a cover 12 for preventing inflow of oxygen gas may be installed, as shown in the diagram, from the lower side of the deionized water flow outlet 10. The cover 12 covers the lower portion and the sides of the deionized water flow outlet 10 on the interior of the tank. The configuration of this cover is virtually a vertically halved hemisphere. With the use of the cover 12 of such a configuration, the deionized water flows downward inside the cover 12 towards the deionized water flow outlet 10. On the other hand, the oxygen gas bubbles move upward due to buoyancy. Hence the oxygen gas bubbles are not entrained by the flow of deionized water. Thus the oxygen gas bubbles do not flow into the heat exchanger 7. The configuration of the cover 12 is not particularly defined. It is sufficient that the configuration of the cover 12 can prevent oxygen gas bubbles rising from passing near the deionized water outlet 10.

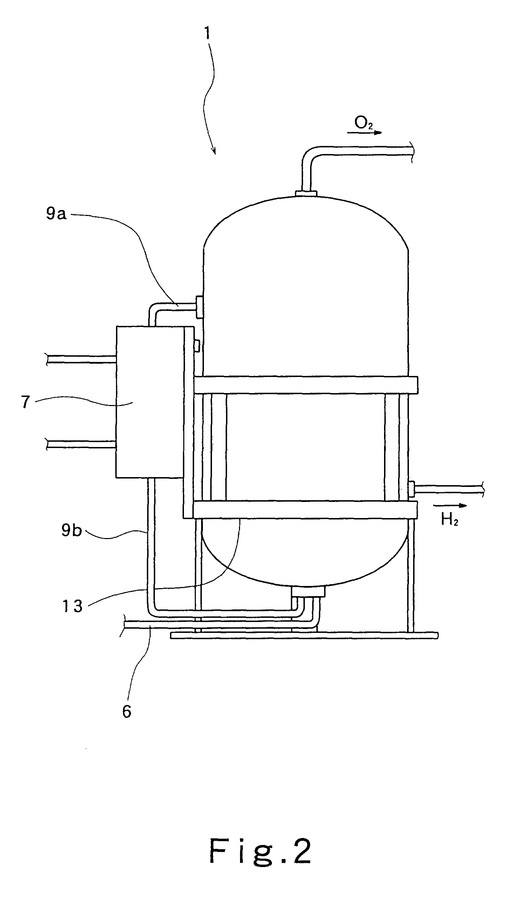

The cooling mechanism shown in Fig. 2 has the same principle of cooling the deionized water as the cooling mechanism of Fig. 1, but the above-mentioned heat exchanger 7 is directly mounted on the tank 1 to make an integrated unit.

In the present embodiment, the heat exchanger 7 is disconnectably mounted on a stand 13 of the tank 1 by means of bolts (not illustrated). The pipes 9a, 9b are disconnectably joined with flanges (not illustrated).

With the above-mentioned arrangement, the support of the tank 1 can be used as the support 13 of the heat exchanger 7, and it is not needed to install another support for the heat exchanger 7. Furthermore, the lengths of the pipes 9a, 9b can be reduced. This in turn can make the apparatus more compact.

According to the present invention, integration of the tank and the heat exchanger is not limited to one with a stand. For example, if the heat exchanger 7 is light in weight, it can be supported by the above-mentioned pipes 9a, 9b alone.

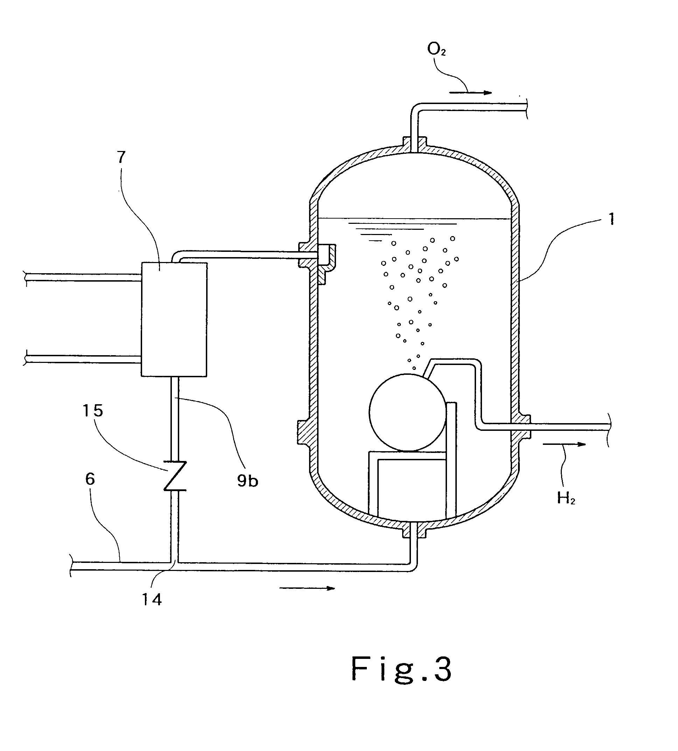

The tank 1 is used at high pressure, and to prevent leakage of deionized water from the tank 1, it is better to reduce the number of ports for piping in the tank 1. From this viewpoint, in the cooling mechanism shown in Fig. 3, the pipe 9b for guiding the deionized water from the heat exchanger 7 into the tank 1 and the deionized water feeding pipe 6 are connected up with each other so that the two flows of deionized water towards the tank 1 are joined together. Furthermore, as a check valve 15 is provided on the line between the heat exchanger 7 and the junction point 14, the two ports for piping present in Fig. 1 can be reduced to one. With this configuration, the number of ports for piping can be reduced, and in turn, the sealing function and the safety of the tank 1 are improved. Moreover, when deionized water is fed by a feeding pump (not illustrated) through the deionized water feeding pipe 6, the cooled deionized water from the heat exchanger 7 can be forced into the tank 1. The provision of the check valve 15 prevents the cooled deionized water from flowing back into the heat exchanger 7.

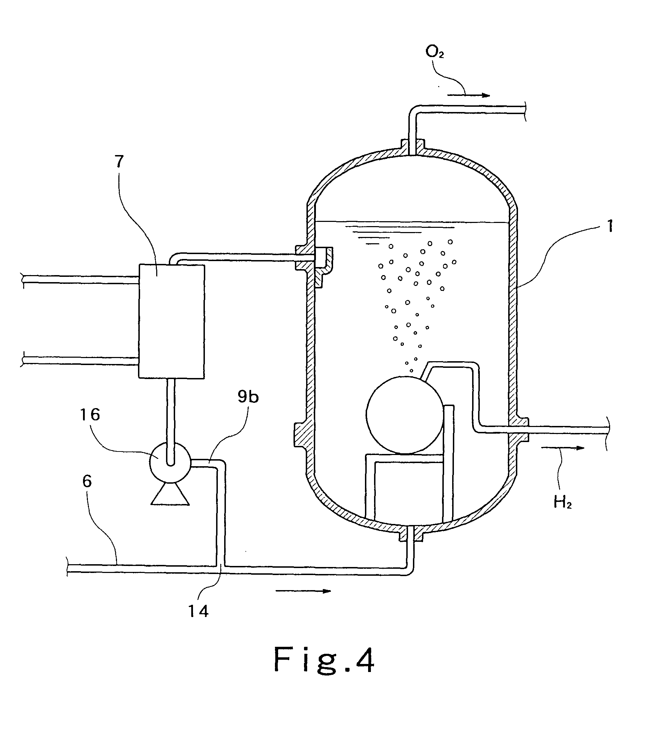

In the cooling mechanism shown in Fig. 4, like the mechanism shown in Fig. 3, the pipe 9b for guiding deionized water from the heat exchanger 7 into the tank 1 and the deionized water feeding pipe 6 are connected up with each other. However, the cooling mechanism of Fig. 4 differs from that of Fig. 3 in that a pump 16 is provided on the above-mentioned pipe 9b between the heat exchanger 7 and this junction point 14. With this configuration, the piping can be simplified, and moreover, the deionized water that is cooled by the heat exchanger 7 can be forced into the tank 1. As a result, the deionized water in the tank will be agitated and the cooling effect in the tank 1 will be enhanced.

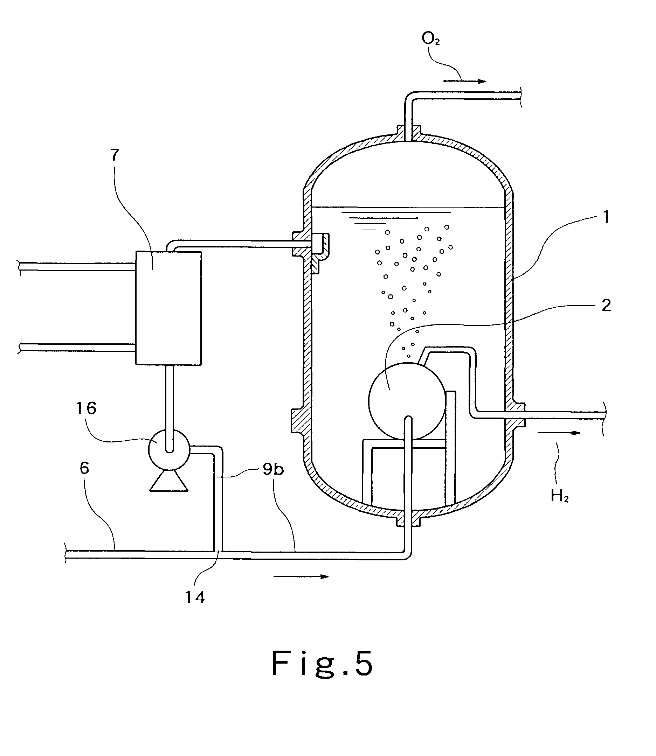

In the cooling mechanism shown in Fig. 5, like the mechanism shown in Fig. 4, the pipe 9b for guiding deionized water from the heat exchanger 7 into the tank 1 and the deionized water feeding pipe 6 are connected up with each other, and a pump 16 is provided on the above-mentioned pipe 9b between the heat exchanger 7 and the junction point 14. However, the above-mentioned pipe 9b is not merely connected to the tank 1 but is extended in the tank 1 and directly connected to the electrolytic cell 2 and penetrating the wall of the tank 1. In other words, the arrangement is such that the cooled deionized water can be directly fed to a deionized water feeding path (not illustrated) in the electrolytic cell 2.

With this arrangement, the piping can be simplified, and moreover, the electrolytic cell 2 being the heat source can be cooled directly. As a result, thermal degradation of the parts of the electrolytic cell 2, such as solid electrolyte membranes and gaskets (not illustrated) can be prevented efficiently.

It should be noted that the configuration of directly connecting up the above-mentioned pipe 9b with the electrolytic cell 2 is not limited to the cooling mechanism shown in Fig. 5 and can be applicable to the cooling mechanisms shown in Fig. 1, Fig. 2, Fig. 3 and Fig. 4.

In the following, the cooling mechanism of the HHOG according to the present invention will be described from the viewpoint of functions by comparing the cooling efficiency of the cooling mechanisms described above and that of the conventional cooling mechanism.

Generally speaking, the heat transfer coefficient α a of the plate type heat exchangers used in the above-mentioned embodiments is from 1000 to 3000 kcal/m²/hr/°C (the mean value is set at 2000 kcal/m²/hr/°C), and the heat transfer coefficient α b of the coil tube type heat exchangers used in the prior art is from 200 to 1000 kcal/m²/hr/°C (the mean value is set at 500 kcal/m²/hr/°C).

On the other hand, the heat generation Q of ordinary electrolytic cells used in the prior art and in the embodiments is 25800 kcal/hr; the value is calculated from the current of 600 A and the voltage of 50 V.

With regard to the cooling conditions, the cooling temperature of the deionized water to be cooled or the drop in temperature Δt is set at 30°C; from 80°C to 50°C. The rise in temperature of the coolant in the heat exchanger Δt is set at 5 °C; from 32°C to 37°C.

Then the required heat transfer area Aa of the heat exchanger of the present embodiment (a plate type heat exchanger is used) is given by${\text{Aa=Q/αa.Δtm = 25800kcal/hr ö 2000kcal/m}}^{\text{2}} \text{/hr/°C ö} {\text{28.7°C= 0.45 m}}^{\text{2}} \text{.}$

On the other hand, the required heat transfer area Ab of the heat exchanger of the prior art (a coil tube type heat exchanger is used) is given by${\text{Ab=Q/αb.Δtm = 25800kcal/hr ö 500 kcal/m}}^{\text{2}} \text{/hr/°C ö} {\text{28.7°C= 1.8 m}}^{\text{2}} \text{.}$

As shown above, a heat exchanger of which heat transfer area is about one fourth (1/4) of that of the prior art, in other words, a small-sized (thin) heat exchanger can be used. As such a small-sized and thin heat exchanger can be used, it is easy to integrate the heat exchanger with the tank 1. Such a free selection of the type and size of heat exchanger is realized by the fact that there is no need, in contrast of the prior art, of installing a heat exchanger in a space of limited configuration or space between the internal surface of the tank wall and the electrolytic cell. Moreover, to put it in another way, it is possible to improve the cooling efficiency significantly by using a heat exchanger of the plate type and of a size similar to the heat exchanger of the prior art.

If the heat transfer area of the above-mentioned heat exchanger is assumed to be identical for both the prior art and the present embodiment, it will be necessary to set the coolant flow rate and the flow rate of deionized water being the object to be cooled of the prior art at about 4 times of those of the present embodiment. Such a assumption is unrealistic.

As explained so far, the present HHOG can be light in weight and compact and achieve a significant improvement in cooling efficiency.

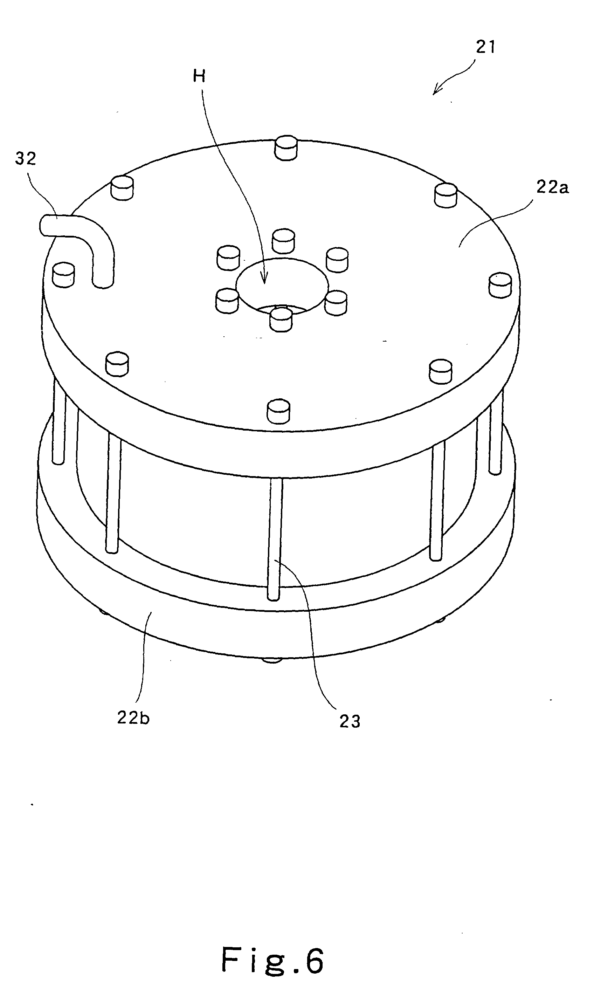

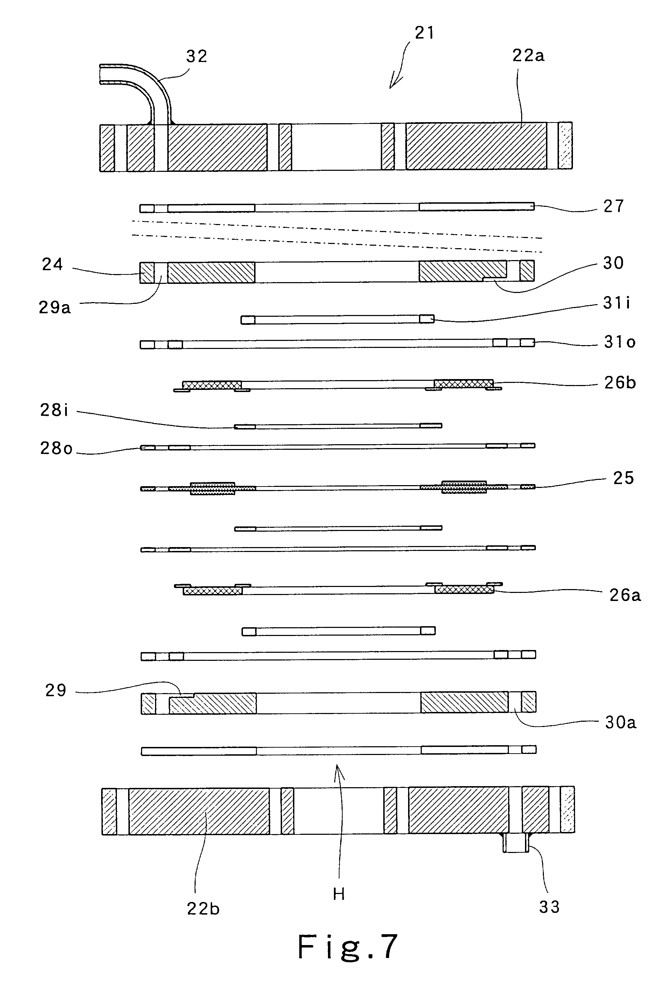

Further, another type of HHOG with a efficient deionized water cooling mechanism is described hereinafter. The water cooling efficiency of said HHOG is highly improved by means of modifying an electrolytic cell of said HHOG, as shown in Figs. 6 through 9.

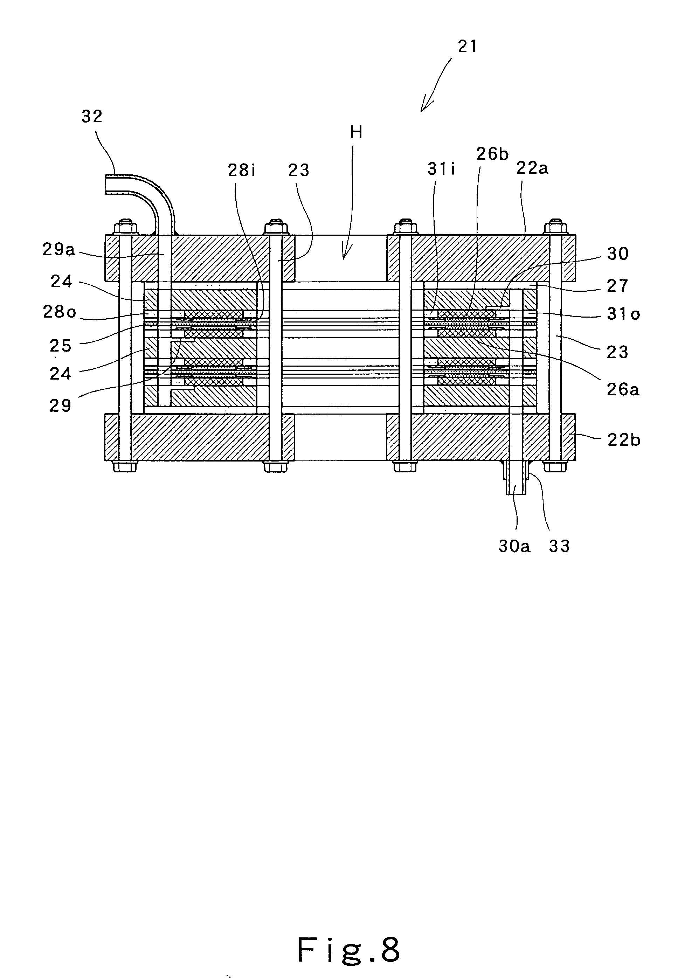

A circular cylindrical electrolytic cell 21 is shown in Fig. 6 through 8. 22a and 22b denote end plates. The components of the electrolytic cell 21 that will be described below are held between these end plates by tightening the bolts 23. Plural bolts 23 are tightened on the outside the outer circumference side and on the outside the inner circumference side of the circular cylindrical electrolytic cell 21, respectively. As shown in Fig. 8 "the outside inner circumference" means the central-cavity-side of the outside of the inner circumference of the cell. Thus, as bolts are provided both on the outer circumference side and the inner circumference side, the electrolytic cell 21 has a greater rigidity than the conventional electrolytic cells. Further more, as the number of clamping bolts is increased, bolts of a smaller diameter may be used.

Numeral 24 denotes a circular ring-shaped electrode plate, and numeral 25 denotes a circular ring-shaped solid electrolyte membrane. Numerals 26a and 26b denote circular ring-shaped porous conductors, respectively. Numeral 27 denotes a circular ring-shaped end gasket, and numeral 28 denotes a circular ring-shaped protective sheet. Numeral 29 denotes an oxygen gas discharging path, and numeral 29a denotes an oxygen gas discharging duct. Numeral 30 denotes a hydrogen gas discharging path, and numeral 30a denotes a hydrogen gas discharging duct. The deionized water feeding path is not shown in the diagram, but it has a configuration similar to that of the hydrogen gas discharging path 30.

The electrolytic cell 21 comprise a plurality of electrolytic cell units stacked together. Each electrolytic cell unit is provided with an anode chamber and a cathode chamber that are separated by said electrolyte membrane 25 and located between said electrode plates 24. Electrolytic cell units adjacent to each other have single electrode plate 24 for common use as a bipolar-type electrode plate. Therefore, each said electrode plate 24 between electrolytic cell units adjacent to each other has opposing surfaces that have opposite polarity when energized.

Both the anode chamber and the cathode chamber are formed as annular compartment being isolated on their inner circumferences and on their outer circumferences from the outside with intermediate gaskets 31.

Said intermediate gasket 31 isolates the anode chamber 26a or the cathode chamber 26b from the outside on the inner circumference side and on the outer circumference side. The intermediate gasket 31 consists of two members; a gasket 31i on the inner circumference side of electrolytic cell as an inner side closing member and a gasket 31o on the outer circumference side thereof as an outer side closing member. The protective sheet 28 consists of two members; a sheet 28i on the inner circumference side of the electrolytic cell and a sheet 28o on the outer circumference side thereof. They are designed to make the anode chamber 26a and the cathode chamber 26b in annular forms, respectively. The anode chamber and the cathode chamber are provided with said porous conductors 26a, 26b respectively. The above-mentioned oxygen gas discharging path 29 connects the anode chamber 26a and the oxygen gas duct 29a. The hydrogen gas discharging path 30 connects the cathode chamber 26b and the hydrogen gas duct 30a.

Preferably, titanium of a plate type is used as a material of said electrode plates 24. As for the porous conductors 26a, 26b, a mesh of titanium is used therefor.

An elbow 32 is provided on the top of the upper end plate 22a and is connected up with the oxygen gas duct 29a. This is, as will be explained later, to guide the oxygen gas generated in the electrolytic cell 21 out of the outer circumference of the electrolytic cell 21. A nipple 33 is provided on the bottom of the lower end plate 22b and is connected up with the hydrogen gas duct 30a. This is, as will be explained later, to connect a hydrogen gas discharging pipe 45 that guides the hydrogen generated in the electrolytic cell 21 out of the deionized water tank 41.

With the configuration as described above, the present electrolytic cell 21 is formed into a circular cylinder having a cavity H in the center thereof.

In the above-mentioned embodiment, as shown in Fig. 6 through Fig. 8, an electrolytic cell having two solid electrolyte membranes has been described. The invention is not limited to it, and any number of solid electrolyte membranes may be used to suit the required quantities of oxygen gas or hydrogen gas.

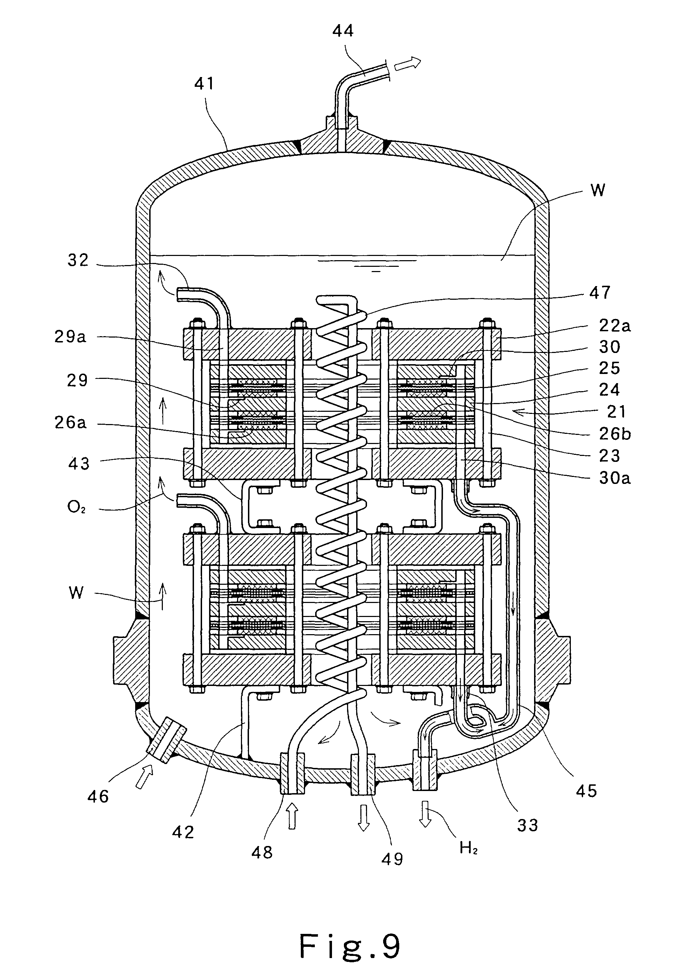

Fig. 9 shows the deionized water tank 41 in which the above-mentioned electrolytic cells 21 are provided in two stages. This deionized water tank 41 is a primary component of the HHOG. Deionized water W is stored in the deionized water tank 41, and this deionized water W is taken into the electrolytic cell 21 and electrolyzed. Numeral 42 is a stand for fixing the electrolytic cell 21 onto the bottom of the deionized water tank 41. Numeral 43 is a connector that connects the electrolytic cells 21 with each other.

Oxygen gas generated in the electrolytic cell 21 is discharged out of the above-mentioned elbow 32 into the deionized water on the outer circumference side of the electrolytic cell 21. Then the oxygen gas is guided through an oxygen gas discharging pipe 44, that is connected onto the top of the deionized water tank 41, and fed into a dehumidifier (not illustrated). The oxygen gas is collected after dehumidification.

On the other hand, the hydrogen gas generated in the electrolytic cell 21 is guided through the hydrogen gas discharging pipe 45, that is connected to the above-mentioned nipple 33 and penetrates the wall of the deionized water tank 41, and fed into a gas-liquid separator tank (not illustrated). Then the hydrogen gas is sent to a dehumidifier (not illustrated). The hydrogen gas is collected after dehumidification. Numeral 46 is a deionized water feeding port to which a deionized water feeding pipe (not illustrated) is connected.

It is a tube type heat exchanger 47 that is installed in the cavity H at the center of the electrolytic cells 21. One end of the heat exchanger 47 is connected to a coolant inlet 48 that is formed in the deionized water tank wall, and the other end is connected to a coolant outlet 49 that is formed in the deionized water tank wall. Cold water, freon, etc. are used as the coolant.

With the configuration as described above, in the deionized water tank 41 the deionized water W that is cooled by the heat exchanger 47 descends through the cavity H at the center of the electrolytic cells 21, and the deionized water W that is heated by the electrolytic cells 21 rises, partly due to the ascent of the oxygen gas generated, on the outer circumference side of the electrolytic cell 21. Thus an effective convection is generated to improve the cooling efficiency of the deionized water as a whole. Moreover, in contrast to the prior art, the heat exchanger is not installed in the annular space outside the electrolytic cell, thus the deionized water tank can be made more compact.

Moreover, although not illustrated, the deionized water tank may be configured with two members, a shell and a head plate each having a flange, or with three members, a shell and two head plates each having a flange. These members may be formed so that they are integrated by flange connections. In this way the above-mentioned electrolytic cell 21 and/or the above-mentioned heat exchanger 47 may be installed in advance on the internal surface of one head plate. With such a configuration, disassembly and assembly of the deionized water tank 41 can be made more easily.

As for the solid electrolyte membrane, a solid polymer electrolyte is suitable to be formed into a membrane, for example, a solid polymer electrolyte membrane, wherein a porous anode and a porous cathode, each of a precious metal, and particularly a metal of the platinum group, a bonded by chemical plating onto opposing faces of a cation exchange membrane, such as a cation exchange membrane made of fluorocarbon resin containing sulphonic acid groups, for example, NAFION 117, available from DuPont deNemours, Inc, Wilmington, Delaware, USA. In this case, both electrodes preferably are made of platinum. In particular, when both electrodes are of a two-layer construction of platinum and iridium, it is possible to electrolyze using a high current density, for example, at 80°C and 200 A/dm², for as long as about four years, whereas a conventional solid electrolyte membrane in which the electrodes are in physical contact with an ion exchange membrane can be electrolyzed at 50 to 70 A/dm². In this case, in addition to the above-mentioned iridium, it is possible to use a solid polymer electrolyte membrane of a multi-layer construction wherein two or more metals of the platinum group are plated. It is possible to achieve operation at a high current density by using above-mentioned membrane.

When a solid electrolyte membrane of the present application is constructed such that electrodes of a precious metal or metals are bonded by chemical plating onto opposing faces of solid polymer electrolyte, water is not present between the solid polymer electrolyte and either electrode. Hence, there is neither solution resistance nor gas resistance, and in turn, contact resistance between the solid polymer electrolyte and each electrode is low, the voltage is low, and current distribution is even. As a result, it is possible to use higher current density and electrolyze water at a higher temperature and at higher pressure, which results in production of high purity oxygen and hydrogen gases with a greater efficiency.

Other solid electrolyte membranes such as ceramic membrane may be used instead of said solid polymer electrolyte membrane.

In the above-mentioned embodiment, the present invention was described by taking an apparatus for producing hydrogen and oxygen of high purity wherein electrolytic cells are installed in two stages as an example. The invention is not limited to this, and may be applied an apparatus wherein an electrolytic cell is installed in one stage or electrolytic cells are installed in three or more stages.

In the present embodiment, a vertical tank (the central axis of the tank is virtually vertical) is used by way of example. In the present invention, however, the tank is not limited to a vertical one, and a horizontal one (the central axis of the tank is virtually horizontal) may be used.

With the use of a cooling mechanism of the present invention, deionized water can be cooled while it is made to circulate by natural convection. Hence no special apparatuses are required, and the resulting configuration is simple. Naturally, it is possible to install apparatuses for forced circulation (such as pumps). Moreover, as the heat exchanger is installed outside the tank, the tank can be made lighter in weight and more compact. This, in turn, will reduce the production cost, transport cost and installation work cost. The type of heat exchanger can be freely selected according to the service conditions and installation conditions. This, in turn, will improve the cooling efficiency.

With the HHOG of the present invention using the cylindrical electrolytic cell, the heat exchanger may be installed in the central cavity of the cylindrical electrolytic cell, and the deionized water tank may be formed more compact. Moreover, a very appropriate route is formed for the natural convection of the deionized water for effectively cooling the entire deionized water wherein the deionized water that is cooled by the heat exchanger descends in the above-mentioned cavity and the deionized water rises through the gap between the outer circumference of the electrolytic cell and the inner surface of the wall of the deionized water tank.

Moreover, as both the outer circumference side and the inner circumference side of the electrolytic cell are clamped and compressed, the rigidity of the electrolytic cell is improved relative to the conventional electrolytic cells.

## Claims

1. An apparatus for producing hydrogen and oxygen having a deionized water tank (1) containing deionized water and an electrolytic cell (2), wherein a heat exchanger (7) for cooling deionized water in the deionized water tank is provided outside the deionized water tank; characterized in that an inlet (7a) of the heat exchanger is connected to a first position that is below the level of the deionized water in the deionized water tank, and in that an outlet (7b) of the heat exchanger is connected to a second position that is below the first position in the deionized water tank.

2. An apparatus as claimed in claim 1, wherein an inlet (7a) of the heat exchanger (7) is connected to a first position that is below the level of the deionized water in the deionized water tank (1), and piping is provided from an outlet (7b) of the heat exchanger to the cell (2) and penetrating the wall of the deionized water tank, and said piping is directly connected to the cell for feeding the cell with cooled and deionized water.

3. An apparatus for producing hydrogen and oxygen provided with
an electrolytic cell (21) having an anode chamber (26a) and a cathode chamber (26b) that are separated by an electrolyte membrane (25) and located between electrode plates (24); and,
a deionized water tank (41) that contains said electrolytic cell;
characterized in that both the anode chamber and the cathode chamber are formed as annular compartments being isolated on their inner circumferences and on their outer circumferences from the outside, the entire electrolytic cell being cylindrical with a cavity at the center thereof, and that
a heat exchanger (47) for cooling the deionized water in the deionized water tank is arranged in the central cavity of the electrolytic cell.

4. An apparatus for producing hydrogen and oxygen as claimed in claim 3, wherein said cylindrical electrolytic cell (21) comprising ring-shaped end plates (22a, 22b) at both ends thereof and plural clamping means located outside the anode chamber and the cathode chamber on both the inner circumference side and the outer circumference side thereof, wherein both the end plates clamp between them the components of the anode chamber and the cathode chamber by the clamping means.

5. An apparatus for producing hydrogen and oxygen as claimed in claim 3, wherein said cylindrical electrolytic cell (21) comprising a ring-shaped electrolyte membrane (25), ring-shaped porous conductors (26a,26b) provided on both the sides of the membrane, ring-shaped electrode plates (24) provided on the outer sides of both the porous conductors, an outer side closing member (31o) provided on the outer circumference side of the porous conductors, and an inner side closing member (31i) provided on the inner circumference side of the porous conductors.

6. An apparatus for producing hydrogen and oxygen as claimed in any of claims 3 to 5, comprising a plurality of said cylindrical electrolytic cells stacked together.

7. An apparatus for producing hydrogen and oxygen as claimed in any of claims 3 to 6, wherein a path for discharging generated oxygen gas (29) is formed to connect the anode chambers (26a) and a port of a discharging of oxygen gas on the outer circumference side of the cylindrical electrolytic cell.

8. An apparatus for producing hydrogen and oxygen as claimed in any of claims 3 to 7, wherein the central axis of the central cavity of the cylindrical electrolytic cell (21) is arranged to align with the central axis of the deionized water tank (41).

9. An apparatus for producing hydrogen and oxygen as claimed in any of claims 3 to 8, wherein the deionized water tank (41) comprises a tank shell and a tank cover, the cylindrical electrolytic cell (21) is disconnectably mounted on the inner side of the tank cover and the cylindrical electrolytic cell is arranged in such a way that when the tank cover is fitted in the deionized water tank shell the cylindrical electrolytic cell will be inside the tank shell.

10. An apparatus for producing hydrogen and oxygen as claimed in any of claims 3 to 8, wherein the deionized water tank (41) consists of a tank shell and a tank cover, the heat exchanger (47) is disconnectably mounted on the inner side of the water tank cover, and the heat exchanger is arranged in such a way that when the water tank cover is fitted in the tank shell the heat exchanger will be inside the tank shell.

## Patentansprüche

1. Vorrichtung zum Erzeugen von Wasserstoff und Sauerstoff mit einem Tank (1) für entionisiertes Wasser, der entionisiertes Wasser und eine Elektrolysezelle (2) enthält, wobei ein Wärmetauscher (7) zum Kühlen von in dem Tank für entionisiertes Wasser enthaltenen entionisierten Wasser außerhalb des Tanks für entionisiertes Wasser vorgesehen ist, dadurch gekennzeichnet, daß ein Einlaß (7a) des Wärmetauschers mit einer ersten Stelle verbunden ist, die sich unterhalb des Niveaus des entionisierten Wassers in dem Tank für entionisiertes Wasser befindet, und daß ein Auslaß (7b) des Wärmetauschers mit einer zweiten Stelle verbunden ist, die sich unterhalb der ersten Stelle in dem Tank für entionisiertes Wasser befindet.

2. Vorrichtung nach Anspruch 1, wobei ein Einlaß (7a) des Wärmetauschers (7) mit einer ersten Stelle verbunden ist, die sich unterhalb des Niveaus des entionisierten Wassers in dem Tank für entionisiertes Wasser (1) befindet, und eine Leitung von dem Auslaß (7b) des Wärmetauschers zu der Zelle (2) vorgesehen ist und die Wand des Tanks für entionisiertes Wasser durchdringt, und wobei die Leitung unmittelbar mit der Zelle zum Speisen der Zelle mit gekühltem und entionisiertem Wasser verbunden ist.

3. Vorrichtung zum Erzeugen von Wasserstoff und Sauerstoff, mit einer Elektrolysezelle (21), die eine Anodenkammer (26a) und eine Kathodenkammer (26b) aufweist, die durch eine Elektrolysemembran (25) getrennt und zwischen Elektrodenplatten (24) angeordnet sind, und mit einem Tank für entionisiertes Wasser (41), der die Elektrolysezelle enthält, dadurch gekennzeichnet, daß sowohl die Anodenkammer als auch die Kathodenkammer als ringförmige Abschnitte bzw. Fächer ausgebildet sind, die an ihren inneren Umfängen und an ihren äußeren Umfängen von der Außenseite isoliert sind, wobei die gesamte Elektrolysezelle zylindrisch mit einem Hohlraum in ihrer Mitte ausgebildet ist, und daß ein Wärmetauscher (47) zum Kühlen des entionisierten Wassers in dem Tank für entionisiertes Wasser in dem zentralen Hohlraum der Elektrolysezelle angeordnet ist.

4. Vorrichtung zum Erzeugen von Wasserstoff und Sauerstoff nach Anspruch 3, wobei die zylindrische Elektrolysezelle (21) ringförmige Endplatten (22a, 22b) an ihren beiden Enden und eine Mehrzahl Klemmittel umfaßt, die außerhalb der Anodenkammer und der Kathodenkammer sowohl an ihrer inneren Umfangseite als auch ihrer äußeren Umfangsseite angeordnet sind, wobei zwischen den beiden Endplatten die Komponenten der Anodenkammer und der Kathodenkammer mittels der Klemmittel geklemmt sind.

5. Vorrichtung zum Erzeugen von Wasserstoff und Sauerstoff nach Anspruch 3, wobei die zylindrische Elektrolysezelle (21) eine ringförmige Elektrolysemembran (25), an beiden Seiten der Membran vorgesehene ringförmige poröse Leiter (26a, 26b), an äußeren Seiten der beiden porösen Leiter vorgesehene ringförmige Elektrodenplatten (24), ein an der äußeren Umfangseite der porösen Leiter vorgesehenes außenseitiges Schließelement (31o), und ein an der inneren Umfangseite der porösen Leiter vorgesehenes innenseitiges Schließelement (31i) umfaßt.

6. Vorrichtung zum Erzeugen von Wasserstoff und Sauerstoff nach einem der Ansprüche 3 bis 5, mit einer Mehrzahl der zylindrischen Elektrolysezellen, die aneinander gestapelt sind.

7. Vorrichtung zum Erzeugen von Wasserstoff und Sauerstoff nach einem der Ansprüche 3 bis 6, wobei ein Pfad zum Entladen erzeugten Sauerstoffgases (29) ausgebildet ist, um die Anodenkammer (26a) mit einem Entladungsanschluß des Sauerstoffgases an der äußeren Umfangseite der zylindrischen Elektrolysezelle zu verbinden.

8. Vorrichtung zum Erzeugen von Wasserstoff und Sauerstoff nach einem der Ansprüche 3 bis 7, wobei die Mittenachse des zentralen Hohlraumes der zylindrischen Elektrolysezelle (21) mit der Mittenachse des Tanks für entionisiertes Wasser (41) ausgerichtet angeordnet ist.

9. Vorrichtung zum Erzeugen von Wasserstoff und Sauerstoff nach einem der Ansprüche 3 bis 8, wobei der Tank für entionisiertes Wasser (41) ein Tankgehäuse und einen Tankdeckel umfaßt, die zylindrische Elektrolysezelle (21) trennbar an der Innenseite des Tankdeckels angebracht und die zylindrische Elektrolysezelle derart angeordnet ist, daß sie sich im Inneren des Tankgehäuses befindet, wenn der Tankdeckel passend an das Gehäuse des Tanks für entionisiertes Wasser montiert ist.

10. Vorrichtung zum Erzeugen von Wasserstoff und Sauerstoff nach einem der Ansprüche 3 bis 8, wobei der Tank für entionisiertes Wasser (41) ein Tankgehäuse und einen Tankdeckel umfaßt, der Wärmetauscher (47) trennbar an der Innenseite des Wassertankdeckels angebracht und der Wärmetauscher derart angeordnet ist, daß er sich im Inneren des Tankgehäuses befindet, wenn der Wassertankdeckel passend an das Tankgehäuse montiert ist.

## Revendications

1. Dispositif de production d'hydrogène et d'oxygène gazeux possédant un réservoir (1) d'eau déminéralisée contenant de l'eau déminéralisée et une cellule à électrolyse (2), dans lequel un échangeur de chaleur (7) destiné à refroidir l'eau déminéralisée contenue dans le réservoir d'eau déminéralisée est disposé à l'extérieur du réservoir d'eau déminéralisée ; caractérisé en ce qu'une entrée (7a) de l'échangeur de chaleur est reliée à une première position qui est située au dessous du niveau de l'eau déminéralisée contenue dans le réservoir d'eau déminéralisée, et en ce qu'une sortie (7b) de l'échangeur de chaleur est reliée à une deuxième position qui est située au dessous de la première position du réservoir d'eau déminéralisée.

2. Dispositif selon la revendication 1, dans lequel une entrée (7a) de l'échangeur de chaleur (7) est reliée à une première position qui est située au dessous du niveau de l'eau déminéralisée contenue dans le réservoir d'eau déminéralisée (1), et où des tuyaux relient une sortie (7b) de l'échangeur de chaleur à la cellule (2) et pénètrent dans la paroi du réservoir d'eau déminéralisée, lesdits tuyaux étant directement reliés à la cellule pour alimenter la cellule avec de l'eau refroidie et déminéralisée.

3. Dispositif de production d'hydrogène et d'oxygène gazeux muni
d'une cellule à électrolyse (21) possédant une chambre d'anode (26a) et une chambre de cathode (26b) qui sont séparées par une membrane à électrolyte (25) et qui sont placées entre les plaques d'électrode (24) : et
d'un réservoir (41) d'eau déminéralisée qui renferme ladite cellule à électrolyse ;
caractérisé en ce que la chambre d'anode et la chambre de cathode ont toutes deux la forme de compartiments annulaires isolés de l'extérieur du côté de leurs circonférences intérieures et de leurs circonférences extérieures, l'ensemble de la cellule à électrolyse étant cylindrique et disposant d'une cavité cylindrique en son centre, et en ce que
un échangeur de chaleur (47) destiné à refroidir l'eau déminéralisée dans le réservoir d'eau déminéralisée est disposé dans la cavité centrale de la cellule à électrolyse.

4. Dispositif de production d'hydrogène et d'oxygène selon la revendication 3, dans lequel ladite cellule à électrolyse cylindrique (21) comprend des plaques d'extrémité en forme d'anneau (22a, 22b) à ses deux extrémités et une pluralité de moyens de blocage situés à l'extérieur de la chambre d'anode et de la chambre de cathode du côté de la circonférence intérieure et de la circonférence extérieure de celle-ci, dans lequel les deux plaques d'extrémité serrent entre elles les composants de la chambre d'anode et de la chambre de cathode par l'action des moyens de blocage.

5. Dispositif de production d'hydrogène et d'oxygène gazeux selon la revendication 3, dans lequel ladite cellule à électrolyse (21) cylindrique comprenant une membrane (25) à électrolyte en forme d'anneau, des conducteurs poreux en forme d'anneau (26a, 26b) disposés des deux côtés de la membrane, des plaques d'électrode (24) en forme d'anneau disposées sur les côtés extérieurs des deux conducteurs poreux, un élément de fermeture de côté extérieur (31o) disposé du côté de la circonférence extérieure des conducteurs poreux, et un élément de fermeture de côté intérieur (31i) disposé du côté de la circonférence intérieure des conducteurs poreux.

6. Dispositif de production d'hydrogène et d'oxygène selon l'une quelconque des revendications 3 à 5, comprenant une pluralité des dites cellules à électrolyse cylindriques empilées les unes sur les autres.

7. Dispositif de production d'hydrogène et d'oxygène selon l'une quelconque des revendications 3 à 6, dans lequel un circuit permettant d'évacuer l'oxygène gazeux (29) est formé pour relier les chambres d'anode (26a) à un orifice d'évacuation d'oxygène gazeux pratiqué du côté de la circonférence extérieure de la cellule à électrolyse cylindrique.

8. Dispositif de production d'hydrogène et d'oxygène selon l'une quelconque des revendications 3 à 7, dans lequel l'axe central de la cavité centrale de la cellule à électrolyse cylindrique (21) est agencé de façon à être aligné avec l'axe central du réservoir (41) d'eau déminéralisée.

9. Dispositif de production d'hydrogène et d'oxygène selon l'une quelconque des revendications 3 à 8, dans lequel le réservoir (41) d'eau déminéralisée comprend une coque de réservoir et un couvercle de réservoir, la cellule à électrolyse cylindrique (21) est montée de manière amovible sur le côté intérieur du couvercle de réservoir et la cellule à électrolyse cylindrique est agencée de façon à ce que lorsque le couvercle de réservoir est emboîté dans la coque du réservoir d'eau déminéralisée, la cellule à électrolyse cylindrique se trouve placée à l'intérieur de la coque du réservoir.

10. Dispositif de production d'hydrogène et d'oxygène selon l'une quelconque des revendications 3 à 8, dans lequel le réservoir (41) d'eau déminéralisée comprend une coque de réservoir et un couvercle de réservoir, l'échangeur de chaleur (47) est monté de manière amovible sur le côté intérieur du couvercle de réservoir d'eau et l'échangeur de chaleur est agencé de façon à ce que lorsque le couvercle de réservoir d'eau est emboîté dans la coque du réservoir, l'échangeur de chaleur se trouve placé à l'intérieur de la coque du réservoir.
